Europäisches Patentamt

European Patent Office

Office européen des brevets

(11) Publication number: **0 234 787**
**B1**

# EUROPEAN PATENT SPECIFICATION

(45) Date of publication of the patent specification:
09.08.89

(51) Int. Cl.⁴: **F16C 35/067, F16C 27/04**

(21) Application number: **87301092.0**

(22) Date of filing: **09.02.87**

(54) **A bearing assembly.**

(30) Priority: **21.02.86 GB 8604349**

(43) Date of publication of application:
**02.09.87 Bulletin 87/36**

(45) Publication of the grant of the patent:
**09.08.89 Bulletin 89/32**

(84) Designated Contracting States:
**DE FR IT**

(56) References cited:
**EP-A- 0 019 361**
**DE-A- 2 211 010**
**DE-C- 812 134**
**FR-A- 1 054 128**
**FR-A- 1 473 654**
**FR-A- 1 473 654**
**GB-A- 566 073**
**GB-A- 566 073**

**ANTRIEBSTECHNIK, vol. 10, no. 12, December 1971,**
**pages 453-456; R. HÜBENER: "Sprengringe DIN 5417"**
**PRODUCT ENGINEERING, vol. 29, no. 34, 25th**
**August 1958, page 30; "Preassembled spring washers"**

(73) Proprietor: TRW CAM GEARS LIMITED, Old Church
Road, Clevedon Avon BS21 6NJ(GB)

(72) Inventor: Adams, Frederick John, Pelba 27 Princes
Road, Clevedon Avon(GB)

(74) Representative: Walters, Frederick James et al,
Urquhart-Dykes & Lord 91 Wimpole Street, London
W1M 8AH(GB)

## Description

The present invention relates to a bearing assembly and particularly concerns the provision of a novel bearing retaining member for such an assembly. Conventionally a bearing for rotatably mounting a shaft in a housing is located in a seating on the shaft and/or in the housing to be restrained from displacement axially of the shaft in one sense of direction by its abutment with a shoulder in the housing or on the shaft. Several proposals have been made for restraining the bearing in the opposite axial direction such as a collar or nut which is screw threaded on the shaft or in the housing to abut the bearing on the side thereof axially remote from the aforementioned shoulder or a ring member which may be force fitted or snap engaged in an annular recess on the shaft or in the housing on the side of the bearing remote from the aforementioned shoulder to provide the appropriate retention. The ring member may be in the form of a split ring, such as a so-called circlip, which is sprung into the annular recess. It is recognised that the use of a screw threaded nut or collar to retain the bearing is expensive and inappropriate in many bearing assembly structures, for example the structure may not have space available to fit such a member or the screw threads may be impractical to machine or locate within the structure. Consequently a most widely adopted means for retaining the bearing in its location against the aforementioned annular shoulder is a split-ring spring clip which corresponds, when fitted, to the diameter of the annular recess in the shaft or in the housing and stands proud of the annular recess to overlie a relatively minor portion of the radial thickness of the bearing.

For efficient fitting of such a split-ring spring clip it is advisable to ensure that the diameter of the clip when fitted corresponds to the diameter of the annular recess within which it is accommodated so that different diameter clips are generally provided, as required, for various sized annular recesses in which they are to be accommodated.

A further proposal for retaining a bearing in its seating is disclosed in French Patent Specification 1 054 128 where an annular outer race of the bearing has externally fitted thereto a flat, planar, spring clip member which has a circumferentially spaced array of radially and circumferentially extending resilient arms which flex in the plane of the spring member and radially relative to the outer race. The outer race of the bearing is inserted into a complementary cylindrical seating so that the resilient arms snap engage with an annular recess in the cylindrical seating. This engagement serves to restrain axial displacement of the bearing relative to the seating. Consequently axial forces applied between the outer race and the seating components cause shear forces to be applied to the part lengths of the arms which extend between those components with the possibility that the said part lengths may flex to permit displacement between the components. Furthermore there is the disadvantage or inconvenience with the proposal in FR-1 054 128 that the spring clip member has to be fitted to the outer race of the bearing prior to the outer race being located in its seating.

It is an object of the present invention to provide a bearing assembly, with an improved means for retaining the bearing which means alleviates the disadvantages of the prior proposals and is of the spring kind to engage with an annular recess to effect the necessary retention, is inexpensive, easily fitted and can flex to be stably accommodated within annular recesses of different diameters while standing proud of such recesses to a substantial extent.

## STATEMENT OF INVENTION & ADVANTAGES

According to the present invention there is provided a bearing assembly comprising a bearing for a shaft and having an annular member mounted by a seating; means restraining the annular member from displacement axially of the shaft and relative to said seating in one sense; an annular recess adjacent to said seating, and a substantially flat, planar, spring retaining member having a circumferentially spaced array of radially and circumferentially extending resilient arms which flex in the plane of said spring retaining member for snap engagement with said annular recess to restrain the annular member from axial displacement in the opposite sense relative to said seating characterised in that the annular recess is located adjacent to an end face of the annular member and said spring member comprises a substantially annular or ring part from which the arms extend radially, said arms having radially thick free end portions which portions engage in the annular recess and project radially therefrom to overlie the end face of the annular member and thereby restrain the annular member from said axial displacement in the opposite sense and having relatively thin mid portions between said annular part and the thick free end portions which thin portions flex radially to permit snap engagement of the thick end portions with the annular recess.

By the present invention the retaining member for the bearing assembly may simply be formed as a one piece component of resilient material such as plastics or spring steel with its arms extending outwardly radially and circumferentially from a centre part of the member or with its arms extending inwardly radially and circumferentially from an outer ring part of the member. With the arms extending outwardly from its centre part the thick free end portions of the arms snap engage with an internal annular recess in the housing for retaining a bearing which is mounted in, for example, a cylindrical seating in the housing adjacent to the annular recess; with this arrangement the annular or ring centre part of the member from which the arms extend outwardly may be such that a shaft mounted in the bearing can extend therethrough.

In an arrangement where the arms of the retaining member extend radially inwardly from the outer ring part, the arms may be flexed for their thick free end portions to snap engage with an external annular recess on a shaft adjacent to a bearing which is seated on the shaft.

It will be apparent that the retaining member for the present invention can easily be fitted by radially displacing the arms, inwardly or outwardly as appropriate depending upon whether the member is of the type to be engaged with an internal annular recess or an external annular recess respectively, locating the so deformed retaining member over the recess and allowing the arms to snap engage with the recess. Although such fitting may be achieved manually and without the use of special tools, for commercial purposes it is likely several of the retaining members will be accommodated in a cartridge or similar device and held in their flexed or stressed condition ready for fitting so that each member is displaced from the cartridge it can snap engage with a recess. By way of example, the cartridge may comprise a tube within which an array of similar retaining members having arms extending outwardly from centre part are held with their arms flexed radially inwardly so that the tube and members can be located in a housing (and possibly over a shaft) to a position where one of the retaining members can be displaced from the tube to snap engage with an internal annular recess in the housing.

Preferably the arms of the retaining member are similarly orientated to extend radially and circumferentially of the retaining member and provide a generally sprial or curved configuration; in this way side edges of part lengths of the arms (usually towards or at the free ends thereof) can engage within the annular recess (rather than merely the extremities of the arms at their free ends) to provide a firm fitting of the arms with the annular recesses. The flexible and spring nature of the arms will permit the retaining member to engage, within reason, with annular recesses of different diameters although it will be realised that for efficient use of its spring characteristics, the retaining member will be manufactured with a particular and preferred diameter of annular recess in mind. On this latter point it is also preferred that the aforementioned side edges of the thick free end portions of the arms which engage with the annular recess are arcuate to substantially correspond with the diameter of the annular recess with which they are preferably to engage (so that the side edges are arcuately convex for engagement with an internal annular recess and are arcuately concave for engagement with an external annular recess).

A further preferred feature of the present invention is that the thick free end portions of the arms of the retaining member engage in the annular recess with a wedge action so that by this action the retaining member will be seated firmly in the annular recess and restrained against axial displacement by the constant biasing effect of the arms radially into the recess. The aforementioned wedge action may also serve to bias the retaining member axially in a direction towards the bearing which it is to retain and thereby firmly hold the bearing on or in its seating. The wedge action between the arms and the annular recess may be achieved by appropriately tapering the axially opposed faces of the annular recess and/or of the arms.

It will be apparent that the arms of the retaining member and also the centre part or the outer ring part from which the arms extend radially will, when the member is fitted to an annular recess, extend from the annular recess and these may project radially for a considerable extent so that a large abutment area can be provided for retaining the bearing. In accordance with the present invention the spring retaining member restrains the bearing from displacement axially in the "opposite sense" but it will be appreciated that a second and similar spring retaining member may be used to restrain the bearing from displacement in the "one sense" (although usually this latter restraint will be provided by a shoulder on the shaft which receives the bearing or in the housing within which the bearing is mounted).

DRAWINGS

One embodiment of the present invention will now be described, by way of example only, with reference to the accompanying illustrative drawings, in which:

Figure 1 is an axial section through a bearing assembly of the invention in which a shaft roller bearing is mounted in a housing and retained by a spring retaining member engaging with an internal annular recess in the housing, and

Figure 2 is a side view of a spring retaining member and which is incorporated in the assembly of Figure 1, the member being shown by the full lines in an un-flexed or unstressed condition and by the broken lines in a flexed or stressed condition as fitted in the assembly of Figure 1.

DETAILED DESCRIPTION OF DRAWINGS

The bearing assembly comprises a cylindrical shaft 1 mounted within a housing 2 by a ball bearing 3 having inner and outer races 4 and 5 respectively. The inner race 4 is mounted on a cylindrical seating of the shaft 1 and is restrained from axial displacement relative to the shaft between an annular shoulder 6 of the shaft and a spring clip or circlip type member 7 which is fitted to the shaft (and usually accommodated within a shallow annular groove in the shaft). The outer race 5 of the bearing 3 is seated within a cylindrical rebate 8 of the housing and is restrained from axial displacement in one sense relative to the housing by its abutment with an annular shoulder 9 of the rebate 8. The outer race 5 extends axially from the shoulder 9 to partially overlie an internal annular recess 10 in the housing within which recess is located a spring member 11 that abuts an end face 5a of the outer race 5 and serves to retain the outer race 5, and thereby the bearing 3, in its seating 8 and to restrain the bearing from axial displacement in the opposite sense (that is away from the shoulder 9).

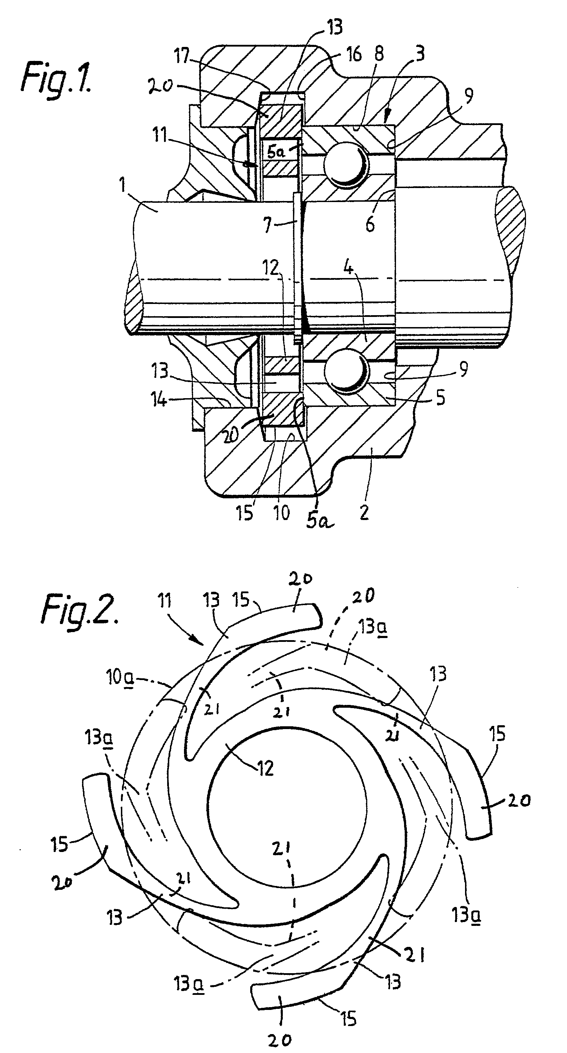

The spring retaining member 11 (see Figure 2) is a one piece substantially flat planar component of resilient material, preferably spring steel or plastics, having a generally annular centre part 12 and four arms 13 extending radially outwardly and circumferentially from the part 12. It will be seen from Figure 2 that each arm 13 has a radially thick free end portion 20 and a, relatively, radially thin mid portion 21 between the centre part 12 and its end portion 20. It will also be seen that the arms 13 are circumferentially spaced and similarly orientated relative to the centre annulus 12 to present a generally curved or spiral profile. With the member 11 in an unflexed or unstressed condition the arms 13 extend outwardly to provide the retaining member with an overall diameter greater than the maximum internal diameter (indicated by the broken line 10a) of the internal annular recess 10.

For fitting the retaining member 11 as part of the assembly shown in Figure 1, the arms 13 are flexed radially inwardly over their thin mid portions 21 (as will be seen from Figure 2) to a position shown at 13a where the retaining member has an overall diameter which permits it to be positioned in the housing 2 (through the mouth 14 thereof) to radially overlie the internal recess 10 while the shaft 1 is accommodated within the centre annular part 12. In this condition the arms 13 are allowed to flex under their natural resilience and the end portions 20 to snap engage with the recess 10. In this latter condition the free end portions 20 project radially from the recess 10 to overlie radially and abut the end face 5a of the outer race 5 on the side of the bearing axially remote from the shoulder 9.

When in engagement with the annular recess 10, the arms 13 adopt the positions illustrated at 13a in Figure 2 so that the resilience of the retaining member 11 constantly biases the arms radially outwardly and in the plane of the member 11 into engagement with the recess. It will be seen from Figure 2 that the arms 13, when in their positions 13a, engage with the recess 10 over a considerable part length 15 of the thick end portions 20 of those arms. Preferably each part length 15 has its radially outer side edge 15 (which opposes the bottom of the annular recess 10) of arcuate convex form to correspond substantially with the diameter of the part of the annular recess 10 with which the parts 15 will engage; in this way the side edges 15 can engage with the recess 10 with a substantial length of contact.

It will be seen from Figure 1 that the annular recess 10 has axially opposed side faces 16 and 17 of which the side face 16 (adjacent to the bearing 3 and which the outer race 5 extends beyond as aforementioned) extends in a radial plane. The side face 17 however is angled from the radial plane to converge towards the side face 16 as the depth of the annular recess 10 increases – thereby providing the recess 10 with a wedge shaped configuration.

With this arrangement, it will be realised that as the arms 13 are biased radially into the recess 10, the wedge shaped configuration of the recess provides a firm and stable engagement between the parts 15 of the arms and the recess. Furthermore, the reaction of the radially outward biasing force from the arms 13 abutting the inclined side wall 17 of the recess imparts an axial component of force on the retaining member 11 which biases that member into abutment with the outer race 5; the bearing 3 is consequently biased axially into firm abutment with the shoulder 9 of its seating. It will be realised that a

similar axial biasing effect from the retaining member 11 on the bearing 5 can be achieved by locating the side face 17 of the annular recess 10 in a radial plane and appropriately tapering the side faces of the arms 13 which abut the face 17.

## Claims

1. A bearing assembly, comprising a bearing (3) for a shaft (1) and having an annular member (5) mounted by a seating (8); means (9) restraining the annular member (5) from displacement axially of the shaft (1) and relative to said sealing (8) in one sense; an annular recess (10) adjacent to said seating (8), and a substantially flat, planar spring retaining member (11) having a circumferentially spaced array of radially and circumferentially extending resilient arms (13) which flex in the plane of said spring retaining member (11) for snap engagement with said annular recess (10) to restrain the annular member (5) from axial displacement in the opposite sense relative to said seating (8) characterised in that the annular recess (10) is located adjacent to an end face (5a) of the annular member (5) and said spring member (11) comprises a substantially annular or ring part (12) iron which the arms (13) extend radially, said arms (13) having radially thick free end portions (20) which portions (20) engage in the annular recess (10) and project radially therefrom to overlie the end face (5a) of the annular member (5) and thereby restrain the annular member (5) from said axial displacement in the opposite sense and having relatively thin mid portions (21) between said annular part (12) and the thick free end portions (20) which thin portions (21) flex radially to permit snap engagement of the thick end portions (20) with the annular recess (10).

2. A bearing assembly as claimed in claim 1 in which the annular recess (10) is internal and the arms (13) of the spring retaining member (11) extend outwardly radially and circumferentially from the annular part (12).

3. A bearing assembly as claimed in either claim 1 or claim 2 in which the shaft (1) extends through the annular part (12) of the spring member.

4. A bearing assembly as claimed in claim 1 in which the annular recess is external and the arms (13) of the spring retaining member (11) extend inwardly, radially and circumferentially from an outer annular part of that member (11) to engage with said external annular recess.

5. A bearing assembly as claimed in any one of the preceding claims in which the arms (13) of the spring retaining member are similarly orientated to extend radially and circumferentially of the spring retaining member and provide a generally spiral or curved configuration.

6. A bearing assembly as claimed in any one of the preceding claims in which side edges (15) of the thick end portions (20) of the arms (13) engage within the annular recess.

7. A bearing assembly as claimed in claim 6 in which said side edges (15) of the arms have an arcuate profile substantially to correspond with a prede-

termined diameter of annular recess (10) with which said side edges engage.

8. A bearing assembly as claimed in either claim 6 or claim 7 when appendent to claim 2 in which said side edges (15) are of convex profile to engage with the internal annular recess (10).

9. A bearing assembly as claimed in either claim 6 or claim 7 when appendant to claim 4 in which said side edges (15) are of concave profile to engage with the external annular recess.

10. A bearing assembly as claimed in any one of the preceding claims in which the thick end portions (20) of the spring retaining member engage in the annular recess (10) with a wedge action which is maintained by a constant biasing of the arms radially into the recess.

11. A bearing assembly as claimed in claim 10 in which the wedge action biases the spring member axially in a direction towards the end face (5a) of the annular member (5).

12. A bearing assembly as claimed in either claim 10 or claim 11 in which axially opposed faces of the annular recess (10) or of the thick end portions (20) taper radially to provide the wedge action.


## Patentansprüche

1. Lagereinheit mit einem Lager (3) für eine Welle (1) und einem Ringteil (5), das mittels eines Sitzes (8) gehalten ist; Mitteln (9), welche das Ringteil (5) gegen Verschiebung in Axialrichtung der Welle (1) und relativ zu dem Sitz (8) in der einen Richtung sichern; einem ringförmigen Einstich (10), welcher dem Sitz (8) benachbart liegt, und einem im wesentlichen flachen und ebenen Feder-Halteteil (11), das mit einer Gruppe von über den Umfang im Abstand voneinander angeordneten, sich in Radialrichtung und Umfangsrichtung erstreckenden elastischen Armen (13) versehen ist, welche in der Ebene des Feder-Halteteils (11) auslenkbar sind, um einen Schnappsitz in dem ringförmigen Einstich (19) herzustellen und das Ringteil (5) an einer axialen Verschiebung in entgegengesetzter Richtung bezüglich des Sitzes (8) zu hindern, dadurch gekennzeichnet, daß der ringförmige Einstich (10) an eine Endfläche (5a) des Ringteils (5) angrenzend gelegen ist und das Feder-Teil (11) einen zumindest annähernd ringförmigen Teil (12) umfaßt, von welchem die Arme (13) radial abstehen, wobei diese Arme (13) radial dicke freie Endteile (20) aufweisen und wobei die Vorsprünge (20) in den ringförmigen Einstich (10) eingreifen und in Radialrichtung davon abstehen, um über der Endfläche (5a) des Ringteils (5) zu liegen und so das Ringteil (5) an einer axialen Verschiebung in der entgegengesetzten Richtung zu hindern, sowie relativ dünne Mittelteile (21) zwischen dem Ringteil (12) und den dicken freien Endteilen (20) aufweisen, wobei diese dünnen Teile (21) in Radialrichtung ausgelenkt werden, um einen Schnappsitz der dicken Endteile (20) in dem ringförmigen Einstich (10) zu ermöglichen.

2. Lagereinheit nach Anspruch 1, bei welcher der ringförmige Einstich (10) innenseitig gelegen ist und die Arme (13) des Feder-Halteteils (11) sich von dem Ringteil (12) in Radialrichtung auswärts und in Umfangsrichtung erstrecken.

3. Lagereinheit nach Anspruch 1 oder 2, bei welcher die Welle (1) sich durch das Ringteil (12) des Feder-Teils erstreckt.

4. Lagereinheit nach Anspruch 1, bei welcher der ringförmige Einstich außenseitig gelegen ist und die Arme (13) des Feder-Halteteils (11) sich einwärts, in Radialrichtung und in Umfangsrichtung von einem äußeren Ringteil dieses Teils (11) erstrecken, um mit dem außen gelegenen ringförmigen Einstich in Eingriff zu kommen.

5. Lagereinheit nach einem der vorstehenden Ansprüche, bei welcher die Arme (13) des Feder-Halteteils jeweils in gleicher Weise orientiert sind, um sich in Radialrichtung und Umfangsrichtung des Feder-Halteteils zu erstrecken und eine allgemein spiralförmige oder gekrümmte Konfiguration zu ergeben.

6. Lagereinheit nach einem der vorstehenden Ansprüche, bei welcher die Seitenränder (15) der dicken Endteile (20) der Arme (13) mit dem ringförmigen Einstich in Eingriff kommen.

7. Lagereinheit nach Anspruch 6, bei welcher die Seitenränder (15) der Arme ein bogenförmiges Profil aufweisen, um annähernd einem vorbestimmten Durchmesser des ringförmigen Einstichs (10) zu entsprechen, mit dem die Seitenränder in Eingriff gelangen.

8. Lagereinheit nach Anspruch 6 oder 7 in Verbindung mit Anspruch 2, bei welcher die Seitenränder (15) ein konvexes Profil aufweisen, um mit dem innen gelegenen ringförmigen Einstich (10) in Eingriff zu kommen.

9. Lagereinheit nach Anspruch 6 oder 7 in Verbindung mit Anspruch 4, bei welcher die Seitenränder (15) ein konkaves Profil aufweisen, um mit dem außen gelegenen ringförmigen Einstich in Eingriff zu kommen.

10. Lagereinheit nach einem der vorstehenden Ansprüche, bei welcher die dicken Endteile (20) des Feder-Halteteils in dem ringförmigen Einstich (10) mit Keilwirkung, welche durch konstante Vorspannung der Arme radial in den Einstich hinein aufrechterhalten wird, in Eingriff kommen.

11. Lagereinheit nach Anspruch 10, bei welcher die Keilwirkung das Feder-Teil axial in einer Richtung zu der Endfläche (5a) des Ringteils (5) hin vorspannt.

12. Lagereinheit nach Anspruch 10 oder 11, bei welcher die axial einander gegenüberliegenden Flächen des ringförmigen Einstichs (10) oder die dicken Endteile (20) in Radialrichtung verjüngt sind, um die Keilwirkung hervorzurufen.


## Revendications

1. Ensemble de palier comprenant un palier (3) pour un arbre (1) et ayant un élément annulaire (5) monté au moyen d'un logement (8); des moyens (9) retenant l'élément annulaire (5) contre tout déplacement axial par rapport à l'arbre (1) et par rapport audit logement (8) dans un premier sens; un évidement annulaire (10) adjacent audit logement (8) et un élément sensiblement plat et plan (11) de retenue à ressort ayant une rangée espacée circonférentiellement de bras élastiques (13) s'étendant radialement et circonférentiellement, qui fléchissent dans le plan dudit élément (11) de retenue à ressort pour s'enclencher par effet de ressort avec ledit évidement annulaire (10) afin de retenir l'élément annulaire (5) contre tout déplacement axial dans le sens opposé par rapport audit logement (8), caractérisé en ce que l'évidement annulaire (10) est situé à proximité immédiate d'une face extrême (5a) de l'élément annulaire (5) et ledit élément (11) à ressort comprend une partie sensiblement annulaire ou en anneau (12) de laquelle les bras (13) s'étendent radialement, lesdits bras (13) ayant des parties extrêmes libres radialement épaisses (20), lesquelles partites (20) s'enclenchent dans l'évidement annulaire (10) et en font saillie radialement pour recouvrir la face extrême (5a) de l'élément annulaire (5) et retenir ainsi l'élément annulaire (5) contre ledit déplacement axial dans le sens opposé, et ayant des parties médianes relativement minces (21) entre ladite partie annulaire (12) et les parties extrêmes libres et épaisses (20), lesquelles parties minces (21) fléchissent radialement pour permettre un enclenchement par effet de ressort des parties extrêmes épaisses (20) avec l'évidement annulaire (10).

2. Ensemble de palier selon la revendication 1, dans lequel l'évidement annulaire (10) est intérieur et les bras (13) de l'élément (11) de retenue à ressort s'étendent vers l'extérieur, radialement et circonférentiellement depuis la partie annulaire (12).

3. Ensemble de palier selon la revendication 1 ou la revendication 2, dans lequel l'arbre (1) s'étend à travers la partie annulaire (12) de l'élément à ressort.

4. Ensemble de palier selon la revendication 1, dans lequel l'évidement annulaire est extérieur et les bras (13) de l'élément (11) de retenue à ressort s'étendent vers l'intérieur, radialement et circonférentiellement depuis une partie annulaire extérieure de cet élément (11), pour s'enclencher avec ledit évidement annulaire extérieur.

5. Ensemble de palier selon l'une quelconque des revendications précédentes, dans lequel les bras (13) de l'élément de retenue à ressort sont orientés similairement de façon à s'étendre radialement et circonférentiellement à l'élément de retenue à ressort et à présenter une configuration globalement en spirale ou incurvée.

6. Ensemble de palier selon l'une quelconque des revendications précédentes, dans lequel les bords latéraux (15) des parties extrêmes épaisses (20) des bras (13) s'enclenchent dans l'évidement annulaire.

7. Ensemble de palier selon la revendication 6, dans lequel lesdits bords latéraux (15) des bras présentent un profil incurve pour correspondre sensiblement à un diamètre prédéterminé de l'évidement annulaire (10) avec lequel lesdits bords latéraux s'enclenchent.

8. Ensemble de palier selon la revendication 6 ou la revendication 7 lorsqu'elle dépend de la revendication 2, dans lequel lesdits bords latéraux (15) ont un profil convexe pour s'enclencher avec l'évidement annulaire intérieur (10).

9. Ensemble de palier selon la revendication 6 ou la revendication 7 lorsqu'elle dépend de la revendication 4, dans lequel lesdits bords latéraux (15) ont un profil concave pour s'enclencher avec l'évidement annulaire extérieur.

10. Ensemble de palier selon l'une quelconque des revendications précédentes, dans lequel les parties extrêmes épaisses (20) de l'élément de retenue à ressort s'enclenchent dans l'évidement annulaire (10) avec une action de coin qui est maintenue par un rappel constant des bras radialement dans l'évidement.

11. Ensemble de palier selon la revendication 10, dans lequel l'action de coin rappelle l'élément à ressort axialement en direction de la face extrême (5a) de l'élément annulaire (5).

12. Ensemble de palier selon la revendication 10 ou la revendication 11, dans lequel des faces axialement opposées de l'évidement annulaire (10) ou des parties extrêmes épaisses (20) s'amincissent radialement pour produire l'action de coin.

EP 0 234 787 B1

Fig.1.

Fig.2.